# EUROPEAN PATENT APPLICATION

(11) **EP 4 186 669 A1**
(43) Date of publication of application: **31.05.2023**
(21) Application number: 22180781.1
(22) Date of filing: 23.06.2022
(51) Int. Cl.: B29B 7/60, B29B 7/74, B29B 7/88, B29B 9/12, B29B 17/04, B09B 3/38, B09B 5/00, B29B 7/16, B29B 7/42, B29B 7/48, B29B 9/06, B09B 101/75

(54) **RECYCLING MUNICIPAL WASTE INTO INJECTION MOLDING FEEDSTOCK**

(30) Priority: 28.11.2021 IL 28848721
(71) Applicant: Super Pipe Ltd., 4482100 Barkan (IL)
(72) Inventor: ZAFRIR, Igal, 5528309 Qiryat Ono (IL)
(74) Representative: Zacco GmbH

(57) **Abstract**

The present disclosure concerns recycling of municipal by a process for preparing composite aggregates and feedstocks for injection molding from the municipal waste. The process involves blending a first source material derived from solid municipal waste and comprising more than 50 wt% of polymeric material, together with a second source material that comprises one or more thermoplastic polymers, to obtain a mixture comprising a total polymeric content of at least about 60 wt%, and mixing the mixture in a vessel under conditions permitting self-heating of the mixture to a temperature below the melting temperature of said thermoplastic polymers to obtain composite aggregates in which said thermoplastic polymers bind the particles of the first source material.

## Description

### TECHNOLOGICAL FIELD

The present disclosure is in the field of recycling of municipal waste and concerns a process for preparing composite aggregates and feedstocks for injection molding from municipal waste.

### BACKGROUND ART

References considered to be relevant as background to the presently disclosed subject matter are listed below:
- US patent publication no. 5,728,741

Acknowledgement of the above references herein is not to be inferred as meaning that these are in any way relevant to the patentability of the presently disclosed subject matter.

### BACKGROUND

Awareness to the need of waste recycling has grown significantly in the past few decades, with the recognition that traditional disposal methods, such as burying or burning, have immense environmental and ecological negative impact. Of major concern are insufficient recycling processes of municipal waste. While in the European Union almost 50% of municipal waste is currently being recycled (according to Eurostat, the EU produced 502 kg of waste per capita during 2019, 48% of which have been recycled or composted), recycling in other first-world countries is far less. In the US, for example, only 9% of solid municipal waste generated during 2018 were recycled. According to the United States Environmental Protection Agency, 292 million tons of municipal solid waste have been produced during 2018, about 58% of which attributed to domestic paper, food and plastic waste; however only 69 million tons have been recycled or composed, with a major part of which (above 66%) being recycling of paper waste.

Due to the diversity of municipal waste, most traditional recycling processes require lengthy and costly sorting processes to sort and separate the waste into its different components, then treating each component separately and differently. This, as the reader may realize, is time, energy and resources consuming.

### GENERAL DESCRIPTION

The present disclosure provides a method for recycling municipal waste into feedstock for injection molding processes in the production of injection molded products, predominantly plastic injection molded products. As different types of plastics bind poorly to one another, utilization of recycled plastic component, and even more so unsorted recycled plastics, in the preparation of new plastic products has been significantly limited. The present inventors have developed a recycling process for municipal waste, that requires minimal sorting, which produces composite materials that are suitable to be used as feedstocks in injection molding processes. The process of this disclosure is based on the realization that municipal waste and plastic waste can be mechanically treated to produce aggregates having a high polymeric content, hence making these suitable *per se* for injection molding processing or suitable for further compounding into an injection molding feedstock having controllable flow and mechanical properties.

Thus, the present disclosure provides a process for manufacturing of composite aggregates, the process comprises blending a first source material that is derived from solid municipal waste, the first source material includes more than about 50 wt% of polymeric material, with a second source material that comprises one or more thermoplastic polymers, to thereby obtain a mixture that comprises a total polymeric content of at least about 60 wt%; and mixing the mixture in a vessel under conditions permitting self-heating of the mixture to a temperature below the melting temperature of said thermoplastic polymers to obtain composite aggregates in which said thermoplastic polymers bind particulate matter of the first source material.

In other words, the process comprises blending a first source material that is derived from solid municipal waste, with a second source material that comprises (or consists predominantly of) one or more thermoplastic polymers. The first source material comprises more than about 50 wt% of polymeric material. Blending of the first and second source materials provides a mixture that comprises a total polymeric content of least about 60 wt%. This mixture is then being mixed without actively heating, *i.e.* the mixing conditions are such that the friction between particles of solid municipal waste and particles of the thermoplastic polymers is sufficient to self-heat the mixture to a temperature that is below the melting temperature of the thermoplastic polymers. Without wishing to be bound by theory, the inventors have surprisingly found that such self-heating is sufficient in order to soften the thermoplastic components and at least partially embed other components (e.g. components of the first source material that are not thermoplastic components, such as other plastic components, wood, paper, fibers, metals, glass, *etc.*) within the thermoplastic components in order to produce composite aggregates. As no external heating need to be invested in order to produce the composite aggregates, the process is energetically efficient and significantly reduces production costs.

By some embodiments, blending and mixing are carried out concomitantly.

The term *solid municipal waste* means to denote commercial and residential waste, typically domestic or commercial trash, that is predominantly made of plastic, paper (or paper derived products, such as cardboard), wood, metals, glass, textiles, as well as food waste. It is to be understood that the composition of the solid municipal waste varies, depending, *inter alia,* on local sorting and recycling policies, however the majority (*i.e.* above 50%) of the solid municipal waste is typically attributed to food and kitchen waste, plastics, paper and/or paper-derived products, and wood.

As a person of skill would appreciate, the solid municipal waste can be sorted or unsorted.

According to some embodiments, the solid municipal waste used in the process of this disclosure is unsorted waste. *Unsorted waste* typically refers to waste that is received as-is, without any pre-separation or pre-removal of certain materials/components therefrom. The term also means to encompass solid municipal waste from which one or more components have been pre-removed. Typically, the unsorted waste comprises at least 85% of its original weight, more typically at least 90%.

By some embodiments, the solid municipal waste is unsorted.

By other embodiments, the solid municipal waste is waste from which one or more components have been pre-removed at the landfill or other pre-processing facility, before applying the process of this disclosure thereonto, with the purpose of increasing the polymeric content of the waste.

The solid municipal waste can, and is preferably, dry, *i.e.* containing no more than 10% moisture, typically no more than 5% moisture (*i.e.* water or aqueous liquids). Such dry solid municipal waste is also known as "refuse-derived fuel" (RDF).

By some embodiments, the first source material is in the form of particulate matter.

In the process of this disclosure, the first source material is derived from solid municipal waste. The term *derived* means to denote solid municipal waste (and/or RDF) from which particulate matter having a density of more than about 0.9 g/cm³ is removed.

According to some embodiments, the first source material is obtained by removing particulate matter having a density of more than about 1 g/cm³ from the solid municipal waste.

By some embodiments, the first source material is obtained by removing particles having a size above a certain threshold from the solid municipal waste. In other words, by some embodiments, the first source material consists of solid municipal waste in particulate form, having a particle size of no more than about 100 mm. When unsorted waste is utilized, the term *derived* refers to removal and exclusion of particles having a density of over 1 g/cm³ and/or a size of more than about 100 mm, however with no significance to the materials from which they are made; that is to say, the waste is not sorted into waste types.

Removal of dense/large particles can be carried out by any suitable technique, for example manual removal, sieving, screening, gravitational separation, hydroseparation, or any other suitable separation process. When utilizing liquid-based separation processes, the first source material typically undergoes drying processes in order to reduce its moisture content to below 10%, preferably below 5%.

It is noted that the plastic, or polymeric content, of the solid municipal waste can vary. Typically such plastics originate from packaging materials, thin plastic sheets, plastic household products and furniture, *etc.* The first source material utilized in the process of this disclosure comprises a polymeric content of at least about 50 wt%, *e.g.* between about 50 wt% and 95 wt%. By some embodiments, the polymeric content of the first source material in the process of this disclosure is between about 50 wt% and about 90 wt%, between about 50 wt% and about 85 wt%, or even between about 50 wt% and about 80 wt%. The polymeric components in the first source material can be thermoplastic or thermosetic, typically predominantly thermoplastic polymers. The polymers may be natural (i.e. from a natural source), synthetic, semi-synthetic or chemically modified natural polymers.

The term *polymer* (or *polymeric component* or *polymeric content*)*,* as used herein, refers to substances having a molecular structure built of repeating building blocks chemically bonded one to the other. The term includes homopolymers, copolymers, such as for example, block, graft, random and alternating copolymers as well as terpolymers, further including their derivatives, combinations and blends thereof. The term includes all geometrical configurations of such structures including linear, block, graft, random, alternating, branched structures, and combination thereof. Block copolymers encompass polymers formed from two or more homopolymer subunits (blocks) linearly linked by chemical bonds (*i.e.* the blocks are connected end-to-end). Block copolymers with two, three, four and multiple homopolymer units are referred to as di-block, tri-block, tetra-block and multi-blocks, respectively. The number of monomer types in a block copolymer may be less than or equal to the number of blocks. Thus, an ABC linear tri-block consists of three monomer types, whereas an ABA linear tri-block consists of two monomer types.

*Thermoplastic* polymers are polymers that have a defined melting point, and are pliable or moldable at elevated temperatures. Non-limiting examples of thermoplastic polymers include, for example, polyolefins, polystyrene, polyvinyl chloride (PVC), acrylonitrile-butadiene-styrene (ABS), styrene copolymers, polyacrylonitrile, polyacrylates, polyacrylamides, vinyl acetate polymers, vinyl alcohol polymers, cellulose plastics, thermoplastic elastomers, thermoplastic polyurethanes, polyester-based thermoplastic elastomers, thermoplastic polyesters, polyethylene terephthalate, polybutylene terephthalate, compatibilized thermoplastic blends, polyacetal, polyethers, polyarylates, polycarbonates, polyamides, polyimides, polybenzimidazoles, aromatic polyhydrazides and polyoxadiazoles, polyphenyl-quinoxalines, polyphenylene sulfide, polyphenylene vinylene, conducting thermoplastics, conducting thermoplastics composites, poly(aryl ether sulfone)s, poly(aryl ether ketone)s, poly(aryl ether ketones-co-sulfones), poly(aryl ether ketone amide)s, polytetrafluoroethylene, *etc.,* and mixtures thereof.

*Thermosetic* polymers are polymers which are capable of or undergone crosslinking processes (i.e. curing). Non-limiting examples of thermosetic polymers are silicone elastomers, silicone gels, and silicone resins; and thermoset organic polymers such as furan resins, amino resins, polyurethanes, polyimides, phenolic resins, cyanate ester resins, bismaleimide resins, polyesters, and acrylic resins.

As noted, in the process of the present disclosure, the first source material is mixed with a second source material that comprises one or more thermoplastic polymers.

According to some embodiments, the second source material consists predominantly of said one or more thermoplastic polymers.

By some embodiments, the thermoplastic polymers in the second source material comprises predominantly polyolefinic polymers.

By some other embodiments, the second source material comprises at least about 50 wt% low molecular weight polyolefinic polymers.

The term *low molecular weight thermoplastic polymer* refers to one or more thermoplastic polymers that have an average molecular weight of no more than about 100,000 g/mol, typically between about 30,000-60,000 g/mol. The low molecular weight thermoplastic polymer typically has a density of no more than about 0.95 g/cm³.

According to some embodiments, the low molecular weight thermoplastic polymer is one or more polyolefins. By some embodiments, the low molecular weight thermoplastic polymer is one or more homopolymeric polyolefins. By some embodiments, the low molecular weight thermoplastic polymer is one or more linear homopolymeric polyolefins.

According to some embodiments, the second source material comprises one or more low molecular weight thermoplastic polymers selected from linear low-density polyethylene (LLDPE), low-density polyethylene (LDPE), very low-density polyethylene (VLDPE), medium-density polyethylene (MDPE), polypropylene homopolymer, and mixtures or copolymers thereof.

According to some embodiments, the second source material comprises at least about 80 wt% low molecular weight thermoplastic polymers. By some embodiments, the second source material comprises at least about 82 wt%, at least about 85 wt%, at least about 87 wt%, at least about 90 wt%, at least about 92 wt%, at least about 95 wt%, or even at least about 97 wt% of said low molecular weight thermoplastic polymers.

By some embodiments, the second source material consists essentially of said low molecular weight thermoplastic polymers.

The second source material is, by some embodiments, a waste material. For example, the second source material can be waste material from product manufacturing lines, agro-plastic waste, waste plastic pipes, waste plastic sheets, *etc.* Alternatively, the second source material is native, non-processed, thermoplastic polymer(s).

According to some embodiments, the second source material is introduced into the process in particulate form. By some embodiments, the second source material has an average particle size of up to about 100 mm, e.g. between 0.1 mm and 100 mm.

The term *average particle size* refers to the arithmetic mean of measured diameters of the particles. When the particles are not substantially spherical, the average particle size is determined based on the equivalent sphere of the particle having its longest dimension as a diameter.

In cases where the second source material is a waste material, the process can further comprise, in some embodiments, pre-treating the second source material before blending with the first source material in order to obtain a desired particle size. Typically, such pre-treating involves size reduction of the second source material; such size reduction can be carried out by any suitable technique, for example chopping, shredding, crushing, cutting, agglomerating, *etc.*

The first and second source materials are blended to form a mixture having a total polymeric content of at least about 60 wt%. Namely, the total of polymeric components (*i.e.* thermoplastic polymers) from the first source material and the second source material in the mixture amounts to at least about 60 wt%. By some embodiments, the total polymeric content of the mixture is at least about 65 wt%, typically at least about 70 wt%, more typically at least about 75 wt%.

According to some embodiments, the mixture comprises between about 25 wt% and about 50 wt% of said first source material.

According to some embodiments, the mixture comprises between about 50 wt% and 75 wt% of said second source material.

By some embodiments, the weight ratio of the first source material to the second source material in the mixture is between about 1:1 and 1:3.

In the process of this disclosure, the mixture is mixed in a vessel under conditions permitting self-heating of the mixture to a temperature below the melting temperature of the thermoplastic polymers, thereby obtaining composite aggregates having a total polymeric content of at least about 60 wt%, in which the thermoplastic polymers bind the particles of the first source material.

Mixing, by some embodiments, is carried out in a rotating drum. By other embodiments, the vessel comprises one or more mixing arrangements, such as pedals or blades. According to some embodiments, the rotation rate of the mixing arrangement is at least 1,000 rpm, typically between about 1,000 and 3,000 rpm.

As noted, one of the unique features of the process is carrying out the mixing without actively applying heating conditions, as mixing is carried out under conditions permitting self-heating of the mixture to a temperature below the melting temperature of the thermoplastic polymers, caused by friction between the particles of the first and second source materials.

By some embodiments, the temperature to which the mixture is self-heated to at most about 100°C. According to some embodiments, the mixture is self-heated to at most about 90°C, at most about 80°C, or even to at most 70°C.

By such mixing, composite aggregates are obtained, in which the thermoplastic polymeric components bind the particles of the first source material. As used herein, the term *composite aggregate* refers to clumps or agglomerates produced by combining the thermoplastic polymeric components (from both the first and second source materials) and the remainder of particulate matter in the first source material (*i.e.* particulate matter which are not thermoplastic polymers), such that the thermoplastic polymeric components function to bind or hold the rest of the particulate matter together. The aggregates, as noted, contain at least about 60 wt% polymeric content.

According to some embodiments, the composite aggregates have an average aggregate size of at most 200 mm, e.g. between about 10 mm and 150 mm.

By some embodiments, the process further comprises grinding the composite aggregates to an average particle size of less than about 25 mm, e.g. between about 10 mm and 25 mm.

According to some embodiments, the process further comprises adding, during blending and/or mixing, one or more functional additives to the mixture. Such additives can be selected, in a non-limiting manner, from plasticizers, lubricants, colorants, antioxidants, UV-stabilizers, mycotoxin scavengers, fillers, or any other functional additive.

The composite aggregates can be used *per se* as a raw material for injection molding processing. Hence, according to another aspect of this disclosure, there is provided a composite aggregate product obtained by the process described herein.

According to some embodiments, the composite aggregates have a melt flow index (MFI) value of at least about 3 g/10min, *e.g.* at least 4 g/10min (as measured according to ASTM D 1238).

By some embodiments, the composite aggregates have an Izod impact (notched) of at least about 70 J/m, *e.g.* at least 90 J/m (as measured according to ASTM D 256).

By further embodiments, the composite aggregates have an Izod impact (unnotched) of at least about 400 J/m, *e.g.* at least about 480 J/m (as measured according to ASTM D 256).

Alternatively, the composite aggregates can be further compounded in order to obtain a feedstock for injection molding processing, having defined flow properties and/or mechanical properties.

Hence, according to another aspect of this disclosure, there is provided a process for manufacturing a feedstock for injection molding, the process comprises extruding a blend of the composite aggregate product as defined herein and one or more third source material comprising at least 40 wt% of polymeric materials and having a melt flow index of at least 12 (up to 50) g/10min, to obtain said feedstock.

In the context of the present disclosure, MFI value is measured according to ASTM D 1238, unless specifically otherwise indicated.

By some embodiments, extrusion is carried out in a double helix extruder. Extrusion is, by some embodiments, carried out at an output rate of at most about 5,000 kg/h, e.g. between about 150 and 2,500 kg/h. According to some embodiments, the extrusion blend is heated within the extruder to a temperature of between about 150°C and 230°C, typically in the range of between about 170°C and 200°C.

The one or more third source materials are typically waste materials or waste-derived materials, having a polymeric content of at least about 80 wt%, *e.g.* at least 85 wt%, typically at least 88 wt%, preferably at least 90 wt%.

According to some embodiments, the third source material is composed predominantly of polypropylene, e.g. at least 80 wt% polypropylene. By some other embodiments, the third source material comprises a blend of polypropylene and high-density polyethylene (HDPE).

By some embodiments, the third source material has a melt flow index (MFI) value of between about 10 and 50 g/10min.

According to some embodiments, the third source material and the composite aggregates are mixed one with the other prior to extruding. According to other embodiments, the third source material is fed into the extruder concomitantly with the composite aggregates.

In some embodiments, the extrusion blend comprises between about 10 wt% and 50 wt% of the composite aggregates. By some embodiments, the extrusion blend comprises between about 50 wt% and 90 wt% of said third source material.

By some embodiments, the injection molding feedstock has a total polymeric content of at least about 75 wt%. According to some embodiments, the feedstock has a total polymeric content of at least about 77 wt%, at least about 80 wt%, at least about 82 wt%, at least about 85 wt%, at least about 87 wt%, or even at least about 90 wt%.

The processes described throughout this disclosure can be continuous processes, semi-continuous or batch processes.

By some embodiments, the process for producing the injection molding feedstock further comprises cooling the extrudate upon extraction from the extruder. By some embodiments, the process further comprises chopping or cutting the extrudate to obtain the injection molding feedstock in particulate form. Chopping or cutting of the extrudate can be carried out during cooling or thereafter.

During extrusion, one or more functional additives can be added to the extrusion blend, such as plasticizers, lubricants, colorants, antioxidants, UV-stabilizers, mycotoxin scavengers, fillers, mineral additives (such as calcium salts, talc), desiccants, elastomeric polymers, or any mixture thereof. According to some embodiments, the extrusion blend comprises a total of up to about 10 wt% of said additives.

By another one of its aspects, this disclosure provides an injection molding feedstock obtained by the process as defined herein.

By some embodiments, the injection molding feedstock comprises a total polymeric content of at least about 75 wt%. According to some embodiments, the feedstock has a total polymeric content of at least about 77 wt%, at least about 80 wt%, at least about 82 wt%, at least about 85 wt%, at least about 87 wt%, or even at least about 90 wt%.

By some embodiments, the injection molding feedstock has an average particle size of at most 15 mm, e.g. between about 1 mm and 10 mm.

According to some embodiments, the injection molding feedstock has a melt flow index (MFI) value of between about 10 g/10min and about 50 g/10min.

By some embodiments, the injection molding feedstock has a tensile modulus of at least 600 MPa and elongation at break of at least 12% (as measured according to ASTM D 638).

By other embodiments, the injection molding feedstock has an Izod impact (notched) of at least 50 J/m (as measured according to ASTM D 256).

By another one of its aspects, the disclosure provides an injection molded article obtained from the feedstock described herein.

The article may be any article that can be produced by injection molding, either made entirely from plastic components or further including non-plastic elements (such as metal or wood elements). Non-limiting examples of such articles are toolboxes, organizers, furniture items (chains, sofas, benches, tables, stools, chests), garden furniture, garden sheds, containers, boxes, coolers, planters, pots, shelves or shelving systems, buckets, tubs, *etc.*

As used herein, the term about is meant to encompass deviation of ±15% from the specifically mentioned value of a parameter, such as temperature, pressure, concentration, *etc.*

Whenever a numerical range is indicated herein, it is meant to include any cited numeral (fractional or integral) within the indicated range. The phrases *ranging*/*ranges between* a first indicate number and a second indicate number and *ranging*/*rangesfrom* a first indicate number to a second indicate number are used herein interchangeably and are meant to include the first and second indicated numbers and all the fractional and integral numerals therebetween. It should be noted that where various embodiments are described by using a given range, the range is given as such merely for convenience and brevity and should not be construed as an inflexible limitation on the scope of the invention. Accordingly, the description of a range should be considered to have specifically disclosed all the possible sub-ranges as well as individual numerical values within that range.

Throughout this specification and the claims which follow, unless the context requires otherwise, the term *comprise* (or any lingual variation thereof, such as *comprises* and *comprising*)*,* will be understood to imply the inclusion of a stated integer or step or group of integers or steps but not the exclusion of any integer or step or group of integers and steps.

Generally it is noted that the term *...at least one...* (or alternatively the term *one or more*) as applied to any component should be read to encompass one, two, three, four, five, six, seven, eight, nine, ten or more different occurrences of said component in the composition or process disclosed herein.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

As will be further disclosed hereinbelow, the *processes* of the present invention involve numerous process steps which may or may not be associated with other common physical-chemical processes so as to achieve the desired properties. Unless otherwise indicated, such process steps may be set in different sequences without affecting the workability of the process and its efficacy in achieving the desired end result.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** is a flow chart of an exemplary process for the production of injection molding feedstock according to an embodiment of this disclosure.
**Figs. 2A-2C** are pictures of a composite aggregates prepared by a process according to Example 1
**Fig. 3** is a picture of an injection molding feedstock prepared by the process according to Example 2.

### DETAILED DESCRIPTION

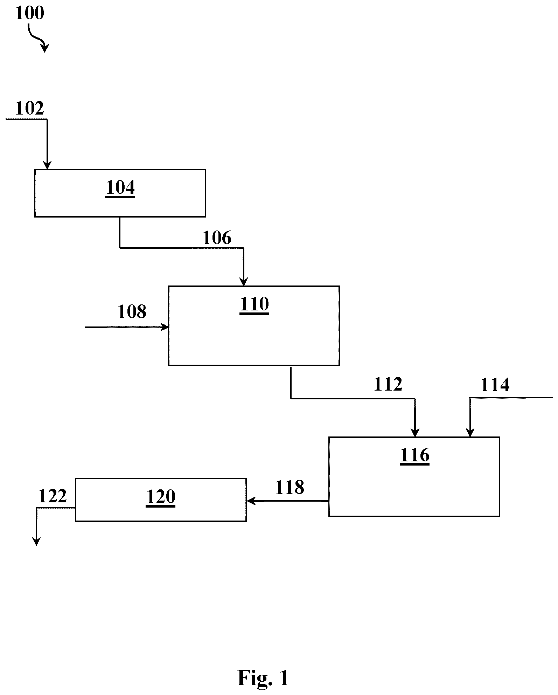

An exemplary process for the production of injection molding feedstock is provided in Fig. 1. In exemplary process **100**, solid municipal waste **102** is fed into a pre-treatment unit **104**, in which particulate matter having a density of above 1 g/cm³ and/or size larger than 100 mm is removed, thereby obtaining first source material **106**. As noted, step **104** is designed to size-exclude large particles, however without sorting out specific materials. It will be noted that, in cases where the first source material is obtained with the proper particle size and/or density, no such pre-treatment unit **104** is required.

The first source material used in the process of this disclosure typically has a polymeric content of at least about 50 wt%, e.g. between about 50 wt% and 95 wt%. The polymeric components in the first source material can be thermoplastic or thermosetic, typically predominantly thermoplastic polymers.

The first source material **106** is typically dry (containing no more than 10%, preferably no more than 5% moisture) when fed into blending and mixing vessel **110**, in which it is blended with second source material **108**. Second source material **108** comprises, and preferably essentially consists predominantly of, one or more thermoplastic polymers. The second source material typically comprises at least 50 wt% low molecular weight thermoplastic polymers, *e.g*. having an average molecular weight of no more than about 100,000 g/mol, and a density of no more than about 0.95 g/cm³. The low molecular weight thermoplastic polymer are typically polyolefins, *e.g*. homopolymeric polyolefins, selected, for example from linear low-density polyethylene (LLDPE), low-density polyethylene (LDPE), very low-density polyethylene (VLDPE), medium-density polyethylene (MDPE), polypropylene homopolymer, and copolymers or mixtures thereof.

The second source material **108** can be a waste material or can consist of native polymers, and typically comprises at least about 80 wt% low molecular weight thermoplastic polymers, e.g. at least about 85 wt%, at least about 90 wt%, or even at least about 95 wt% low molecular weight thermoplastic polymers. The second source material is introduced into the process in particulate form.

In this specific example, blending and mixing of the first source material **106** and second source material **108** is carried out concomitantly, in the same vessel **110**. However, it is also contemplated that blending is carried out first and then transferred to another vessel for mixing.

The first source material **106** and the second source material **108** are blended and mixed together such that the total polymeric content of the mixture is at least about 60 wt%. Typically, the weight ratio of the first source material to the second source material in the mixture is between about 1:1 and 1:3.

As noted, mixing in vessel **110** is carried out under conditions permitting self-heating of the mixture to a temperature below the melting temperature of the thermoplastic polymers. Without wishing to be bound by theory, the inventors have surprisingly found that such self-heating is sufficient in order to soften the thermoplastic components and at least partially embed other component (*e.g.* components of the first source material that are not thermoplastic components, such as other plastic components, wood, paper, fibers, metals, glass, *etc.*) within the thermoplastic components in order to produce composite aggregates. As no external heating is required in order to produce the composite aggregates, the process is more energy efficient. Typically, the temperature to which the mixture is self-heated to in vessel **110** at most about 100°C, *e.g.* at most about 90°C, at most about 80°C, or even to at most 70°C.

The mixing process results in composite aggregates **112**, which contain at least about 60 wt% of polymeric content. Composite aggregates **112** can be utilized by themselves as raw materials for further processing, typically by injection molding.

Alternatively, the composite aggregates **112** can be further compounded by feeding into extruder **116** together with third source material **114**. Feeding of the composite aggregates and the third source material into the extruder can be carried out concomitantly; alternatively, the composite aggregates can be pre-mixed with the third source material (not shown) and fed into the extruder as a pre-blended mixture.

The third source material **114** is typically a waste material or waste-derived materials, having a polymeric content of at least 80 wt%, *e.g.* at least 90 wt%, and having a melt flow index (MFI) of between about 10 and 50 g/10min.

The extrusion blend comprises between about 10 wt% and 50 wt% of the composite aggregates and between about 50 wt% and 90 wt% of said third source material. During extrusion, one or more functional additives can be added to the extrusion blend, such as plasticizers, lubricants, colorants, antioxidants, UV-stabilizers, mycotoxin scavengers, fillers, mineral additives (such as calcium salts, talc), desiccants, elastomeric polymers, or any mixture thereof. The extrusion blend comprises a total of up to about 10 wt% of such additives.

Extrudate **118** has a typical total polymeric content of at least about 75 wt%.

Extrudate **118** can then be cooled and chopped or cut in cooling unit **120** in order to obtain the injection molding feedstock **122** in particulate form.

### Example 1 - preparation of composite aggregates

RDF derived from domestic solid waste was obtained in pellets form. Particles having a density of over 1 g/cm³ from the RDF by gravitational washing, and the RDF was dried in order to obtain a first source material derived from solid municipal waste.

The first source material had a moisture content of below 5% and a polymeric content of between about 70-85 wt%.

The first source material was blended and mixed with low molecular weight polyethylene and polypropylene homopolymers (the second source material) within a mixing vessel equipped with rotating blades, rotating at a rate of about 1,500-2,000 rpm. The second source material had a polymeric content of over 95 wt%. The weight ratio of the first to second source material of this specific example was about 1:1, to obtain a total polymeric content of between about 70 and 90 wt%.

During mixing, the mixture self-heated to a temperature of about 60-70°C, which is below the melting point of the thermoplastic polymers (being typically in the range of 110-160°C).

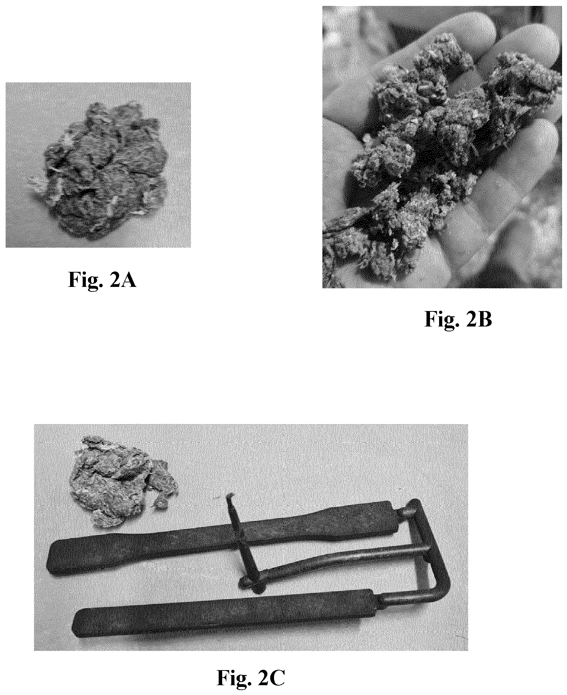

The resulting composite aggregates, with a polymeric content of between about 70 and 90 wt% are shown in Figs. 2A-2B. As can be seen, the thermoplastic components at least partially embed other component (e.g. components of the first source material that not thermoplastic components, such as other plastic components, wood, paper, fibers, metals, glass, *etc.*) although no melting of the thermoplastic components was obtained. As can be seen in Fig. 2C, mechanical testing samples were prepared by injection molding from the composite aggregates; hence, the composite aggregates are suitable for processing by injection molding by themselves *(i.e.* before additional compounding).

**Table 1** shows mechanical test results for an injection-molded sample made of the composite aggregates (before further compounding) prepared according to Example 1. The composite aggregates contained 50 wt% first source material that consisted of RDF derived from domestic solid waste (approximated polymeric content of at least 60 wt%) and 50 wt% of second source material that included a blend of polypropylene and low-density polyethylene.

**Table 1: Properties of composite aggregates**

| | **Test method** | **Result** |
|---|---|---|
| MFI | ASTM D 1238 | 5 g/10min |
| Density | ASTM D 792 | 1< g/cm³ |
| Izod impact notched | ASTM D 256 | 113 ± 8 J/m |
| Impact unnotched | ASTM D 256 | 545 ± 85 J/m |

### Example 2 - preparation of injection molding feedstock

A blend of 20 wt% of composite aggregates (comprising 50 wt% RDF and 50 wt% LDPE blend) as prepared by the method of Example 1 and 80 wt% third source material was prepared. The third source material was a waste-derived material, comprising 70-90 wt% polypropylene homopolymer, 10-20 wt% HDPE, and up to 10 wt% other polymeric components. The third source material had an MFI value of about 40 g/10min.

The blend was extruded in a double helix extruder, at an output rate of at most 1,500 kg/h, and a temperature of between about 170°C and 200°C.

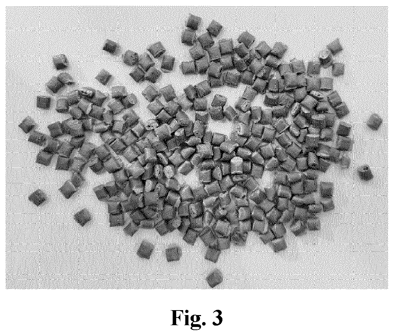

The extrudate was then cooled and chopped into particles having a size of between 5 and 7 mm (Fig. 3) to obtain a feedstock for injection molding.

The total polymeric content of the resulting feedstock was over 85 wt%.

**Table 2** shows the mechanical properties of the injection molding feedstock for two samples prepared according to Example 2.

**Table 2: Properties of injection molding feedstocks**

| | **Test method** | **Sample 1** | **Sample 2** |
|---|---|---|---|
| MFI | ASTM D 1238 | 17 g/10min | 22 g/10min |
| Density | ASTM D 792 | 0.9888 g/cm³ | 0.9906 g/cm³ |
| Tensile strength at yield | ASTM D 638 | 15.6 MPa | 15.0 MPa |
| Tensile modulus | ASTM D 638 | 707 MPa | 700 MPa |
| Elongation at yield | ASTM D 638 | 6.8% | 9% |
| Elongation at break | ASTM D 638 | 16% | 23% |
| Izod impact notched | ASTM D 256 | 63.8 J/m | 59.4 J/m |
| Impact unnotched | ASTM D 256 | 479.7 J/m | 469.6 J/m |

## Claims

1. A process for manufacturing of composite aggregates, the process comprising:
blending a first source material that is derived from solid municipal waste, the first source material comprises more than about 50 wt% of polymeric material, with a second source material that comprises one or more thermoplastic polymers, to obtain a mixture comprising a total polymeric content of at least about 60 wt%, and
mixing the mixture in a vessel under conditions permitting self-heating of the mixture to a temperature below the melting temperature of said thermoplastic polymers to obtain composite aggregates in which said thermoplastic polymers bind the particles of the first source material.

2. The process of claim 1, wherein blending and mixing are carried out concomitantly.

3. The process of claim 1 or 2, wherein the first source material being in particulate form.

4. The process of any one of claims 1 to 3, wherein the first source material is obtained by removing particulate matter having a density of more than about 0.9 g/cm³ from unsorted municipal waste, optionally wherein the first source material is obtained by removing particulate matter having a size larger than 100 mm from unsorted municipal waste.

5. The process of any one of claims 1 to 4, wherein the mixture comprises between about 25 wt% and 50 wt% of said first source material.

6. The process of any one of claims 1 to 5, wherein the total polymeric content of the mixture is at least about 70 wt%.

7. The process of any one of claims 1 to 6, wherein said second source material is a plastic waste material.

8. The process of any one of claims 1 to 7, wherein said thermoplastic polymers in the second source material are polyolefinic polymers, optionally wherein said second source material comprises at least about 50 wt% of low molecular weight polyolefinic polymers.

9. The process of any one of claims 1 to 8, wherein the second source material comprises at least about 80 wt% thermoplastic polymers.

10. The process of any one of claims 1 to 9, wherein said second source material consists essentially of said thermoplastic polymers.

11. The process of any one of claims 1 to 10, wherein said temperature is at most about 100°C.

12. A composite aggregate product obtained by the process of any one of claims 1 to **11.**

13. A process for manufacturing a feedstock for injection molding, comprising extruding a blend of the composite aggregate product of claim 14 and one or more third source material comprising at least 40 wt% of polymeric materials having a melt flow index of at least about 12 g/10min to obtain said feedstock.

14. The process of claim 15, wherein the blend comprises between about 10 wt% and 50 wt% of said composite aggregates, optionally wherein said feedstock has a total polymeric content of at least about 75 wt%.

15. An injection molding feedstock obtained by the process of claim 13 or 14.

16. An injection molded article obtained from the feedstock of claim 15.
